Europäisches Patentamt

European Patent Office

Office européen des brevets

(19)

(11) **EP 1 034 135 B1**

(12) **FASCICULE DE BREVET EUROPEEN**

(45) Date de publication et mention
de la délivrance du brevet:
**16.11.2005   Bulletin 2005/46**

(21) Numéro de dépôt: **98963525.5**

(22) Date de dépôt: **27.11.1998**

(51) Int Cl.7: **C01F 7/02**, C01F 7/34,
C08K 3/22, C08L 21/00,
B60C 1/00, G01N 29/00,
G01N 15/02

(86) Numéro de dépôt international:
**PCT/EP1998/007680**

(87) Numéro de publication internationale:
**WO 1999/028376 (10.06.1999 Gazette 1999/23)**

(54) **CHARGE ALUMINEUSE RENFORCANTE ET COMPOSITION DE CAOUTCHOUC COMPORTANT UNE TELLE CHARGE**

ALUMINIUMHALTIGER, VERSTÄRKENDER FÜLLSTOFF UND DIESEN ENTHALTENDE KAUTSCHUKZUSAMMENSETZUNG

REINFORCING ALUMINOUS FILLER AND RUBBER COMPOSITION COMPRISING SUCH A FILLER

(84) Etats contractants désignés:
**BE DE ES FR GB IT NL**

(30) Priorité:  **28.11.1997  FR 9715128**

(43) Date de publication de la demande:
**13.09.2000   Bulletin 2000/37**

(60) Demande divisionnaire:
**05017185.9 / 1 595 847**

(73) Titulaire: **Compagnie Générale des
Etablissements MICHELIN-MICHELIN & CIE
63040 Clermont-Ferrand Cedex 09 (FR)**

(72) Inventeurs:
 • **CUSTODERO, Emmanuel
 F-63400 Chamalieres (FR)**
 • **SIMONOT, Laure
 F-63000 Clermont-Ferrand (FR)**
 • **TARDIVAT, Jean-Claude
 F-63000 Clermont-Ferrand (FR)**

(74) Mandataire: **Ribière, Joel
Michelin & Cie
Service SGD/LG/PI-LAD
63040 Clermont-Ferrand Cedex 09 (FR)**

(56) Documents cités:
**EP-A- 0 735 088          EP-A- 0 807 603
EP-A- 0 810 258          DE-C- 830 944
GB-A- 2 203 542          US-A- 3 268 295
US-A- 5 305 072          US-A- 5 403 570
US-A- 5 665 605**

**EP 1 034 135 B1**

## Description

La présente invention concerne un dispositif et une méthode de mesure de la vitesse de désagglomération aux ultrasons d'une charge se présentant sous la forme d'agglomérats de particules.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé et une très bonne résistance à l'usure.

De nombreuses solutions ont ainsi été proposées pour abaisser la résistance au roulement et améliorer l'adhérence des pneumatiques, mais celles-ci se traduisent en général par une déchéance très importante de la résistance à l'usure.

Il est bien connu notamment que l'incorporation de charges blanches conventionnelles comme par exemple la silice ($SiO_2$), l'alumine ($Al_2O_3$), l'oxyde de titane ($TiO_2$), la craie, le talc, des argiles telles que la bentonite ou le kaolin par exemple, dans des compositions de caoutchouc utilisées pour la fabrication de pneumatiques et notamment de bandes de roulement, se traduit certes par un abaissement de la résistance au roulement et par une amélioration de l'adhérence sur sol mouillé, enneigé ou verglacé, mais aussi par une déchéance inacceptable de la résistance à l'usure liée au fait que ces charges blanches conventionnelles n'ont pas de capacité de renforcement suffisante vis-à-vis de telles compositions de caoutchouc : on qualifie généralement ces charges blanches, pour cette raison, de charges non renforçantes ou encore de charges inertes.

Une solution efficace à ce problème a été décrite dans la demande de brevet EP-A-0 501 227 qui divulgue une composition de caoutchouc diénique vulcanisable au soufre obtenue par travail thermomécanique d'un copolymère de diène conjugué et d'un composé vinyle aromatique préparé par polymérisation en solution, cette composition comportant une silice précipitée particulière, hautement dispersible, à titre de charge blanche renforçante. Cette composition permet de fabriquer un pneumatique ayant une résistance au roulement nettement améliorée, sans affecter les autres propriétés, en particulier celles d'adhérence, d'endurance et surtout de résistance à l'usure.

D'autres compositions possédant un tel excellent compromis entre plusieurs propriétés contradictoires présenteraient un intérêt majeur pour les fabricants de pneumatiques qui disposeraient ainsi de différents modes d'action. En outre. l'amélioration de la résistance à l'usure ainsi obtenue pourrait éventuellement être convertie en abaissement de la résistance au roulement en diminuant l'épaisseur de la bande de roulement. Il serait ainsi envisageable de confectionner des pneumatiques présentant une durée de vie inchangée, mais plus légers et donc moins consommateurs d'énergie.

La Demanderesse a découvert lors de ses recherches une charge blanche renforçante du type alumineuse (i.e. à base d'un composé d'aluminium), qui permet de manière inattendue d'obtenir un niveau de renforcement au moins égal à celui atteint avec des silices hautement dispersibles.

Une telle charge alumineuse renforçante, utilisable pour le renforcement de compositions de caoutchouc diénique destinées à la fabrication de pneumatiques, consiste en un (oxyde-)hydroxyde d'aluminium répondant, aux impuretés et à l'eau d'hydratation près. à la formule générale (a et b nombres réels):

$$\text{(I)} \qquad Al(OH)_a O_b .$$

avec: $0 < a \le 3$ et $b = (3-a)/2$ , dont la surface spécifique BET est comprise entre 30 et 400 $m^2/g$, la taille moyenne (en masse) de particules $d_w$ est comprise entre 20 et 400 nm, et la vitesse de désagglomération notée $\alpha$ mesurée au test dit de désagglomération aux ultrasons, à 100% de puissance d'une sonde ultrasons de 600 watts, est supérieure à $5.10^{-3}$ $\mu m^{-1}/s$.

Des oxydes ou hydroxydes d'aluminium ont certes déjà été décrits à titre d'additifs divers dans des compositions de caoutchouc pour pneumatiques. A titre d'exemple, la demande de brevet EP-A-0 697 432 décrit l'utilisation de diverses poudres inorganiques de Al, Mg, Ti. Ca, ou d'oxydes ou hydroxydes de ces éléments, en particulier d'alumine ($Al_2O_3$) ou de tri-hydroxyde d'aluminium $Al(OH)_3$, dans le but d'améliorer les performances de freinage et d'adhérence sur sol mouillé. Mais ces charges inertes n'ont ni la fonction ni la capacité de charges renforçantes dans les compositions de caoutchouc décrites, ces compositions étant renforcées de manière conventionnelle par du noir de carbone auquel peut être associé éventuellement de la silice et un agent de couplage pour cette silice.

Ainsi, à la connaissance de la Demanderesse, l'état de la technique ne décrit ni ne suggère une telle charge alumineuse capable de renforcer à elle seule, grâce à une combinaison de caractéristiques spécifiques, des compositions de caoutchouc diénique utilisables pour la fabrication de pneumatiques, ces compositions présentant sensiblement les propriétés avantageuses des compositions à base de silice décrites dans la demande de brevet EP-A-0 501227 précitée.

Le procédé d'obtention d'une telle charge alumineuse comporte les étapes suivantes:

2

- (i) on fait réagir sous agitation une solution aqueuse d'une base de Brönsted sur une solution aqueuse d'un sel d'aluminium afin de précipiter le sel d'aluminium en une suspension d'hydroxyde d'aluminium;
- (ii) on filtre et on lave à l'eau la suspension ainsi obtenue;
- (iii) on sèche le filtrat ainsi obtenu avec un moyen de séchage apte à limiter l'agglomération des particules d'hydroxyde lors de l'élimination de l'eau;
- (iv) puis on traite thermiquement le composé ainsi obtenu de manière à obtenir un (oxyde-)hydroxyde d'aluminium.

Les charges alumineuses sont incorporées dans une composition de caoutchouc vulcanisable au soufre et utilisable pour la fabrication de pneumatiques, comportant au moins un élastomère diénique, une charge blanche renforçante et un agent de couplage assurant la liaison entre la charge blanche et l'élastomère, cette composition étant caractérisée en ce que ladite charge blanche est constituée en tout ou partie d'une charge alumineuse en discussion.

Pour renforcer une composition de caoutchouc diénique utilisable pour la fabrication de pneumatiques, on incorpore à cette composition, par mélangeage dans un mélangeur interne, une telle charge alumineuse avant l'introduction du système de vulcanisation.

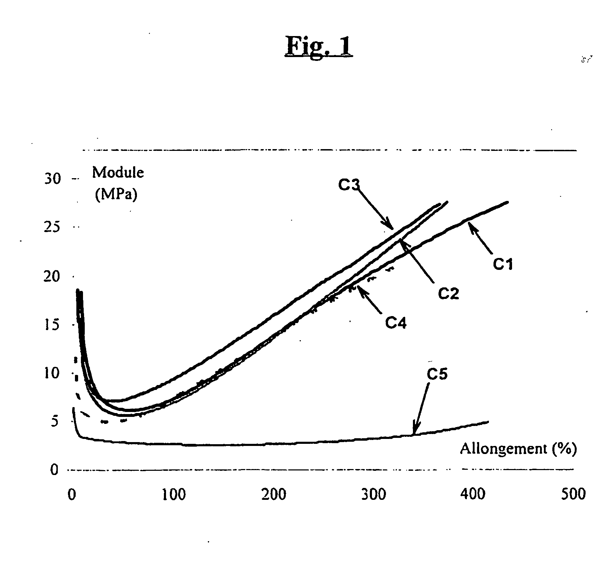

L'invention ainsi que ses avantages seront aisément compris à la lumière de la description et des exemples de réalisation qui suivent, ainsi que des figures 1 à 4 relatives à ces exemples qui représentent:

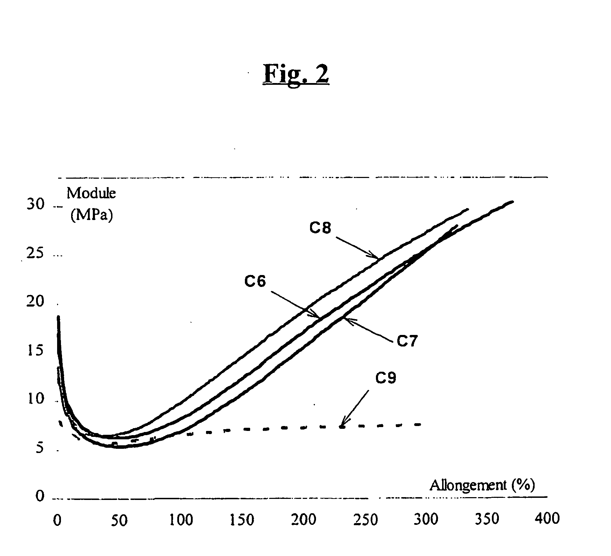

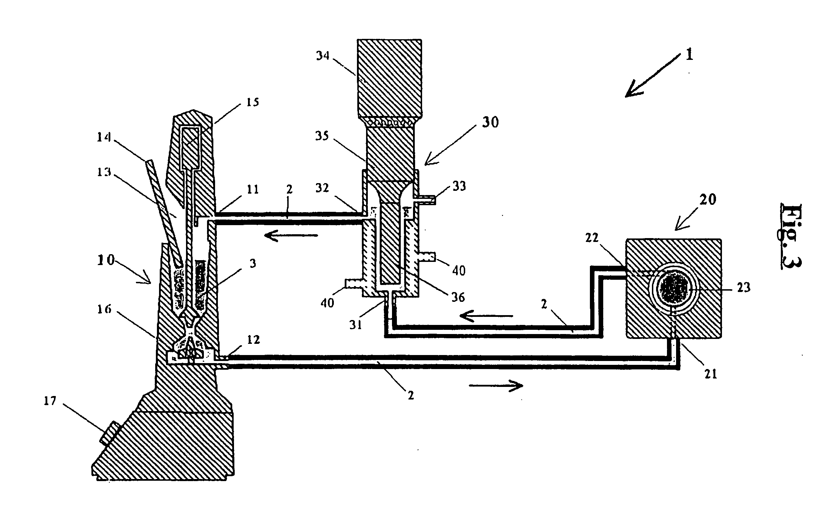

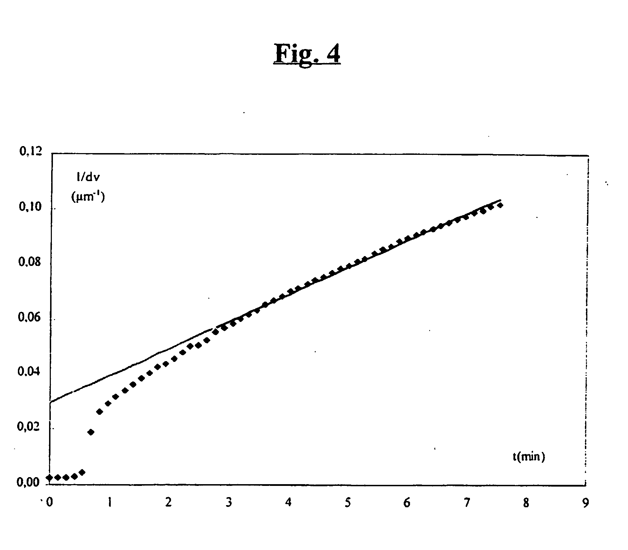

- des courbes de variation de module en fonction de l'allongement pour différentes compositions de caoutchouc diénique, conformes ou non à l'invention (fig. 1 et 2);
- un schéma de dispositif apte à mesurer la vitesse de désagglomération aux ultrasons d'une charge se présentant sous la forme d'agglomérats (fig. 3);
- une courbe d'évolution de la taille des agglomérats, au cours d'une sonification, obtenue à partir du dispositif de la figure 3, courbe à partir de laquelle est déterminée la vitesse de désagglomération $\alpha$ (fig. 4).

## I. MESURES ET TESTS UTILISES

I-1. Caractérisation des charges alumineuses

Les charges alumineuses en question, sous forme de poudre finement divisée, sont caractérisées comme indiqué ci-après.

a) surface spécifique BET:

La surface spécifique BET est déterminée de manière connue, selon la méthode de Brunauer-Emmet-Teller décrite dans "The Journal of the American Chemical Society" Vol. 60, page 309. février 1938 et correspondant à la norme AFNOR-NF-T45-007 (novembre 1987).

b) taille moyenne des particules $d_w$:

La taille moyenne (en masse) des panicules, notée $d_w$, est mesurée de manière classique après dispersion, par désagglomération aux ultrasons, de la charge à analyser dans une solution aqueuse d'hexamétaphosphate de sodium à 0,6% en poids. Dans le cas de surfaces BET supérieures à 200 $m^2/g$, pour une meilleure stabilité de la suspension, on utilise de préférence une concentration de 1% en poids.

Le terme "particule" utilisé dans la présente demande doit être compris dans son sens générique habituel d'agrégat, et non dans celui de particule élémentaire éventuelle pouvant former une partie de cet agrégat (par agrégat, il faut entendre de manière connue un ensemble insécable de particules élémentaires, produit lors de la synthèse de la charge).

La mesure est réalisée au moyen d'un sédimentomètre centrifuge à détection rayons X type "XDC" ("X-rays Disk Centrifuge"), commercialisé par la société Brookhaven Instruments, selon le mode opératoire qui suit: on réalise une suspension de 3,2 g d'échantillon de charge à analyser dans 40 ml d'eau contenant à titre d'agent tensioactif 6 g/l d'hexamétaphosphate de sodium (de préférence 10 g/l dans le cas d'une BET > 200 $m^2/g$), par action durant 8 minutes, à 60% de puissance (60% de la position maxi de l'"output control"), d'une sonde ultrasons de 1500 W (sonificateur Vibracell 3/4 pouce commercialisé par la société Bioblock) ; après sonification, on introduit 15 ml de la suspension dans le disque en rotation ; après sédimentation pendant 120 minutes, la distribution en masse des tailles de particules et la taille moyenne en masse des particules $d_w$ sont calculées par le logiciel du sédimentomètre "XDC" ($d_w = \Sigma(n_i\, d_i^5)$ / $\Sigma(n_i\, d_i^4)$ avec $n_i$ nombre d'objets de la classe de taille $d_i$).

c) vitesse de désagglomération $\alpha$:

La vitesse de désagglomération notée $\alpha$ est mesurée au test dit "test de désagglomération aux ultrasons", à 100% de puissance d'une sonde de 600 watts. Ce test permet de mesurer en continu l'évolution de la taille moyenne (en volume) des agglomérats de particules durant une sonification, selon les indications ci-après.

Le montage utilisé est constitué d'un granulomètre laser (type "Mastersizer S", commercialisé par Malvern Instruments) et de son préparateur ("Malvern Small Sample Unit MSX1"), entre lesquels a été intercalée une cellule de traitement en flux continu (Bioblock M72410) munie d'une sonde ultrasons (Sonificateur type Vibracell 1/2 pouce de 600 W commercialisé par la société Bioblock). Une faible quantité (150 mg) de charge à analyser est introduite dans le préparateur avec 160 ml d'eau, la vitesse de circulation étant fixée à son maximum. Au moins trois mesures consécutives (sans sonification) sont réalisées pour déterminer selon la méthode de calcul connue de Fraunhofer (matrice de calcul Malvern 3$$D) le diamètre initial moyen (en volume) des agglomérats, noté $d_v[0]$. La sonification est ensuite établie à une puissance de 100% ("tip amplitude" en position maxi) et on suit durant 8 minutes environ l'évolution du diamètre moyen en volume $d_v[t]$ en fonction du temps "t" à raison d'une mesure toutes les 10 secondes environ. Après une période d'induction d'environ 3 minutes, il est observé que l'inverse du diamètre moyen en volume $1/d_v[t]$ varie linéairement avec le temps "t" (régime stable de désagglomération). La vitesse de désagglomération $\alpha$ est calculée par régression linéaire de la courbe d'évolution de $1/d_v[t]$ en fonction du temps "t", dans la zone de régime stable de désagglomération. Elle est exprimée en $\mu m^{-1}/s$.

A titre d'exemple et de référence, le test de désagglomération aux ultrasons ci-dessus, appliqué à une silice témoin bien connue de l'homme du métier pour sa très haute dispersibilité (silice commercialisée par la société Rhône-Poulene sous la référence Zeosil 1165MP), conduit à une vitesse de désagglomération, notée $\alpha_0$, d'environ $7,5.10^{-3}$ $\mu m^{-1}/s$.

I-2. Caractérisation des compositions de caoutchouc

Les compositions de caoutchouc sont caractérisées, avant et après cuisson, comme indiqué ci-après.

a) plasticité Mooney:

On utilise un consistomètre oscillant tel que décrit dans la norme AFNOR-NF-T43-005 (Novembre 1980). La mesure de plasticité Mooney se fait selon le principe suivant : le mélange cru est moulé dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (MS 1+4) est exprimée en "unités Mooney" (UM).

b) essais de traction:

Ces essais permettent de déterminer les contraintes d'élasticité et les propriétés à la rupture. Ils sont effectués, sauf indications différentes, conformément à la norme AFNOR-NF-T46-002 de septembre 1988.

On mesure les modules sécants à 10 % d'allongement (M10), 100 % d'allongement (M100) et 300 % d'allongement (M300) ; ces modules sont calculés en se ramenant à la section réelle de l'éprouvette et, sauf indication différente, sont mesurés en seconde élongation (i.e. après un cycle d'accommodation). Toutes ces mesures de traction sont effectuées dans les conditions normales de température et d'hygrométrie selon la norme AFNOR-NF-T40-101 (décembre 1979). Un traitement des enregistrements de traction permet également de tracer la courbe de module en fonction de l'allongement (voir figures 1 et 2 annexées), le module utilisé ici étant le module sécant mesuré en première élongation (i.e. sans cycle d'accommodation), calculé en se ramenant à la section réelle de l'éprouvette.

c) pertes hystérétiques:

Les pertes hystérétiques (PH) sont mesurées par rebond à 60°C au 6ème choc, et exprimées en % selon la relation suivante:

$$PH\,(\%) = 100\,[\,(W_0 - W_1)\,/\,W_0\,]\,.$$

avec $W_0$ : énergie fournie ; $W_1$ : énergie restituée.

d) propriétés dynamiques:

Les propriétés dynamiques, notées $\Delta G^*$ et $\tan(\delta)_{max}$, mesurées en fonction de la déformation, sont effectuées à 10 Hertz avec une déformation crête-crête allant de 0,15% à 50%. La non-linéarité $\Delta G^*$ est la différence de module de cisaillement entre 0,15% et 50% de déformation, exprimée en MPa. L'hystérèse est exprimée par la mesure de $\tan(\delta)_{max}$ qui correspond au maximum de $\tan(\delta)$.

e) test de "bound rubber":

Le test dit de "bound rubber" permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc, fixée par la charge renforçante au cours du mélangeage, donne une indication quantitative de l'activité renforçante de la charge dans la composition de caoutchouc. Une telle méthode a été décrite par exemple dans la norme NF-T-45-114 (juin 1989) appliquée à la détermination du taux d'élastomère lié au noir de carbone.

Ce test, bien connu de l'homme du métier pour caractériser la qualité de renforcement apportée par la charge renforçante, a par exemple été décrit dans les documents suivants: *Plastics, Rubber and Composites Processing and Applications,* Vol. 25, No7, p. 327 (1996) ; *Rubber Chemistry and Technology*, Vol. 69, p. 325 (1996).

Dans le cas présent, on mesure le taux d'élastomère non extractible au toluène, après un gonflement pendant 15 jours d'un échantillon de composition de caoutchouc (typiquement 300-350 mg) dans ce solvant (par exemple dans 80-100 cm$^3$ de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (environ 20°C) et à l'abri de la lumière, et le solvant (toluène) est changé une fois, par exemple après les cinq premiers jours de gonflement. Le taux de "bound rubber" (% en poids) est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

## II. CONDITIONS DE REALISATION

Outre les additifs habituels ou ceux susceptibles d'être utilisés dans une composition de caoutchouc vulcanisable au soufre et utilisable pour la fabrication de pneumatiques, les compositions comportent comme constituants de base (i) au moins un élastomère diénique. (ii) une charge blanche renforçante et (iii) un agent de couplage entre la charge blanche et l'élastomère, ladite charge blanche étant constituée en tout ou partie d'une charge alumineuse en discussion.

II-1. Elastomère diénique

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend en particulier par élastomère diénique susceptible d'être mis en oeuvre dans les compositions en discussion:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - tout copolymère ternaire obtenu par copolymérisation d'éthylène, d'une $\alpha$-oléfine avant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - tout copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99 % et 20 % en poids d'unités diéniques et de 1 % à 80 % en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés et être préparés en dispersion ou en solution.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) entre -40°C et -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Bien entendu, l'élastomère peut être couplé et/ou étoilé ou encore fonctionnalisé avec un agent de couplage et/ou d'étoilage ou de fonctionnalisation. L'élastomère peut également être du caoutchouc naturel ou un coupage à base de caoutchouc naturel avec tout élastomère, notamment diénique, synthétique.

De manière particulièrement préférentielle, l'élastomère diénique de la composition conforme à l'invention est choisi dans le groupe des élastomères diéniques fortement insaturés constitué par les polybutadiènes, les polyisoprènes ou du caoutchouc naturel, les copolymères de butadiène-styrène, les copolymères de butadiène-isoprène, les copolymères d'isoprène-styrène, les copolymères de butadiène-styrène-isoprène, ou un mélange de deux ou plus de ces composés.

Lorsque la composition est destinée à une bande de roulement pour pneumatique, l'élastomère diénique est de préférence un copolymère de butadiène-styrène préparé en solution ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C, ce copolymère de butadiène-styrène étant éventuellement utilisé en mélange avec un polybutadiène possédant de préférence plus de 90 % de liaisons cis-1,4.

II-2. Charge renforçante

Comme indiqué précédemment, la charge alumineuse renforçante de l'invention consiste en un (oxyde-) hydroxyde d'aluminium répondant, aux impuretés et à l'eau d'hydratation près, à la formule générale (a et b nombres réels):

$$(I) \qquad Al(OH)_aO_b \ .$$

avec: $0<a\leq3$ et $b=(3-a)/2$ , dont la surface spécifique BET est comprise entre 30 et 400 $m^2/g$, la taille moyenne (en masse) de particules $d_w$ est comprise entre 20 et 400 nm, et la vitesse de désagglomération notée $\alpha$ mesurée au test dit de désagglomération aux ultrasons, à 100% de puissance d'une sonde ultrasons de 600 W, est supérieure à $5.10^{-3}$ $\mu m^{-1}/s$.

Par (oxyde-)hydroxyde d'aluminium, on entend tout hydroxyde ou oxyde-hydroxyde d'aluminium répondant à la formule générale (1) ci-dessus, en d'autres termes soit un tri-hydroxyde aluminium $Al(OH)_3$ (a=3), soit un oxyde-hydroxyde d'aluminium (a<3), ou un mélange de tri-hydroxydes et/ou oxyde-hydroxydes d'aluminium.

La formule (I) est donnée aux impuretés et à l'eau d'hydratation près étant entendu que les (oxyde-)hydroxydes d'aluminium peuvent comporter une certaine proportion d'eau liée (formule correspondante: $[Al(OH)_aO_b$ , n $H_2O]$ avec n variant par exemple de 1 à 3) ou de certaines impuretés liées au procédé mis en oeuvre pour la fabrication de la charge.

Selon un mode préférentiel, la charge alumineuse consiste en un oxyde-hydroxyde (a<3), encore appelé couramment oxyhydroxyde. Dans de nombreux exemples de réalisation, on a constaté en effet que, parmi les charges alumineuses conformes à l'invention, les oxyhydroxydes montraient des capacités de renforcement encore supérieures à celles offertes par les tri-hydroxydes, vis-à-vis des compositions de caoutchouc diénique destinées à la fabrication de pneumatiques.

Pour ces mêmes raisons, l'oxyhydroxyde d'aluminium de l'invention vérifie plus préférentiellement la relation : $0 < a < 2$.

Les (oxydes-)hydroxydes d'aluminium ci-dessus, pour pouvoir remplir une fonction effective de renforcement des compositions de caoutchouc diénique, c'est-à-dire induire une amélioration de leurs propriétés mécaniques, et mériter ainsi le qualificatif de charge renforçante, doivent présenter, à l'état finement divisé de charge sous lequel ils sont revendiqués, toutes les caractéristiques de BET. de taille moyenne $d_w$ et de vitesse de désagglomération $\alpha$ énoncées précédemment.

Pour une surface BET inférieure à 30 $m^2/g$, les compositions présentent certes une mise en oeuvre (aptitude à la transformation ou "processabilité") facilitée et une hystérèse réduite, mais on observe une déchéance des propriétés de rupture et de résistance à l'usure en pneumatique ; pour des surfaces BET supérieures à 400 $m^2/g$, la mise en oeuvre à l'état cru devient plus difficile (plasticité Mooney plus élevée) et la dispersion de la charge s'en trouve dégradée. Pour des tailles $d_w$ trop élevées, supérieures à 400 nm, les particules se comportent comme des défauts qui localisent les contraintes et sont préjudiciables à l'usure ; des tailles $d_w$ trop petites, inférieures à 20 nm, vont par contre pénaliser la mise en oeuvre à l'état cru et la dispersion de la charge au cours de cette mise en oeuvre.

Pour toutes les raisons exposées ci-dessus, la surface BET est de préférence comprise dans un domaine de 50 à 350 $m^2/g$ et la taille de particules $d_w$ est de préférence comprise dans un domaine de 30 à 200 nm ; plus préférentiellement encore, la surface BET est comprise dans un domaine de 70 à 300 $m^2/g$ et la taille $d_w$ est comprise dans un domaine de 50 à 150 nm.

La dispersibilité intrinsèque d'une charge peut être évaluée à l'aide du test dit de désagglomération aux ultrasons décrit au chapitre I précédent, par mesure de la vitesse de désagglomération $\alpha$. On a constaté que pour une vitesse $\alpha$ supérieure à $5.10^{-3}$ $\mu m^{-1}/s$, la charge alumineuse présente une dispersibilité satisfaisante, c'est-à-dire que peu d'agglomérats microniques sont observés par réflexion en microscopie optique sur une coupe d'une composition caoutchouteuse préparée selon les règles de l'art.

Pour une dispersion encore meilleure de la charge alumineuse dans la matrice de caoutchouc diénique, et donc pour un renforcement optimal, la vitesse de désagglomération $\alpha$ est de préférence supérieure à $6.10^{-3}$ $\mu m^{-1}/s$ ; ceci est particulièrement avantageux notamment pour la fabrication de bandes de roulement de pneumatique présentant à la fois une faible résistance au roulement et une résistance élevée à l'usure. Plus préférentiellement encore, la vitesse de désagglomération $\alpha$ est au moins égale à $7,5.10^{-3}$ $\mu m^{-1}/s$ (valeur $\alpha_o$ précédemment définie).

La charge présente une réactivité de surface élevée, i.e. un taux élevé de fonctions de surface (Al-OH) réactives vis-à-vis d'un agent de couplage (charge blanche/élastomère), ce qui est particulièrement favorable aux propriétés mécaniques des compositions de caoutchouc, c'est-à-dire à la fonction de renforcement remplie par cette charge.

La charge alumineuse peut être préparée selon un procédé comportant les étapes décrites ci-après.

On fait tout d'abord réagir, sous agitation, une solution aqueuse d'une base de Brönsted sur une solution aqueuse d'un sel d'aluminium afin de précipiter le sel d'aluminium en une suspension d'hydroxyde d'aluminium. Cette première étape est réalisée de préférence à une température supérieure à la température ambiante, par exemple à une température comprise dans un domaine de 25°C à 50°C environ. Comme base de Brönsted conviennent par exemple l'hydrogénocarbonate de sodium, l'hydroxyde d'ammonium, plus particulièrement le carbonate d'ammonium ; le sel d'aluminium est par exemple du sulfate ou du nitrate d'aluminium.

Puis on filtre et on lave à l'eau la suspension ainsi obtenue, cette opération de filtrage-lavage pouvant être réalisée en une ou plusieurs fois.

On sèche ensuite le filtrat ainsi obtenu avec un moyen de séchage apte à limiter l'agglomération des particules d'hydroxyde lors de l'élimination de l'eau. Les moyens de séchage utilisables sont connus de l'homme du métier : on peut procéder par exemple par cryolyophilisation, par atomisation, ou sous conditions super-critiques, ou utiliser tout autre moyen équivalent apte à éviter une agglomération excessive, par capillarité, des particules d'hydroxyde lors de l'élimination de l'eau.

Enfin, on traite thermiquement le composé ainsi obtenu de manière à obtenir un (oxyde-) hydroxyde d'aluminium. La température de ce traitement thermique est de préférence comprise entre 100°C et 700°C. De manière générale, plus la température est élevée, plus la formule (I) du composé d'aluminium obtenu se "déplace" de l'hydroxyde vers l'oxyde (diminution de a et augmentation de b). Un traitement prolongé à une température de traitement trop élevée, par exemple d'environ 800°C ou plus, conduirait à l'obtention non pas d'un oxyde-hydroxyde d'aluminium mais d'un oxyde d'aluminium pur (ou alumine $Al_2O_3$). Ainsi, la température de traitement thermique se situe plus préférentiellement dans un domaine de 120°C à 600°C, encore plus préférentiellement de 150°C à 550°C. Le traitement thermique peut être réalisé à l'air dans tout type de four connu ; la durée du traitement thermique peut varier dans une large mesure, en fonction notamment de la température choisie et du type de four utilisé, par exemple de quelques minutes à plusieurs heures.

L'homme du métier saura ajuster les différents paramètres ci-dessus en fonction des conditions particulières de mise en oeuvre du procédé et du composé final visé, à la lumière de la description et des exemples de réalisation qui suivent.

La charge blanche peut être utilisée seule ou en association avec une autre charge renforçante, par exemple une charge blanche renforçante telle que de la silice. A titre de seconde charge blanche renforçante, on utilise de préférence une silice précipitée hautement dispersible, en particulier pour la fabrication de bandes de roulement de pneumatiques présentant une faible résistance au roulement. Comme exemples non limitatifs de telles silices hautement dispersibles préférentielles, on peut citer la silice Perkasil KS 430 de la société Akzo, la silice BV3380 de la société Degussa, les silices Zeosil 1165MP et 1115MP de la société Rhône-Poulenc, la silice Hi-Sil 2000 de la société PPG, les silices Zeopol 8741 ou 8745 de la Société Huber.

De préférence, dans les compositions en discussion, la charge alumineuse constitue la majorité. i.e. plus de 50 % en poids, de la charge blanche renforçante totale. Cette charge peut avantageusement constituer la totalité de la charge blanche renforçante.

La charge alumineuse seule ou éventuellement associée à une seconde charge blanche renforçante, par exemple de la silice, peut également être utilisée en coupage, i.e. en mélange, avec du noir de carbone. Comme noirs de carbone conviennent tous les noirs de carbone renforçants, notamment les noirs du type HAF. ISAF, SAF, conventionnellement utilisés dans les pneumatiques et particulièrement dans les bandes de roulement des pneumatiques. A titre d'exemples non limitatifs de tels noirs, on peut citer les noirs des séries 100, 200 ou 300 (grades ASTM), par exemple les noirs N115, N134, N234, N339, N347, N375. La quantité de noir de carbone dans la charge renforçante totale (charge blanche totale + charge noire) peut varier dans de larges limites, cette quantité de noir de carbone étant préférentiellement inférieure à la quantité de charge blanche totale.

De manière préférentielle, le taux de charge blanche renforçante totale dans les compositions de l'invention est compris dans un domaine allant de 20 à 300 pce, plus préférentiellement de 30 à 150 pce, l'optimum étant différent selon les applications visées : de manière connue, le niveau de renforcement attendu sur un pneumatique vélo, par exemple, est nettement inférieur à celui exigé sur un pneumatique pour véhicule de tourisme ou pour véhicule utilitaire tel que poids lourd.

II-3. Agent de couplage

Il est bien connu de l'homme du métier qu'il est nécessaire d'utiliser, pour une silice renforçante, un agent de couplage (silice/élastomère), encore appelé agent de liaison, qui a pour fonction d'assurer la liaison entre la charge blanche et l'élastomère, tout en facilitant la dispersion de cette charge blanche au sein de la matrice élastomérique.

La charge blanche nécessite également l'emploi d'un tel agent de couplage pour assurer pleinement sa fonction de charge renforçante dans la composition de caoutchouc.

Par agent de "couplage" (charge blanche/élastomère), on entend plus précisément un agent apte à établir une connexion suffisante, de nature chimique et/ou physique, entre la charge blanche et l'élastomère, tout en facilitant la dispersion de cette charge blanche au sein de la matrice élastomérique : un tel agent de couplage, au moins bifonctionnel, a par exemple comme formule générale simplifiée « Y-T-X », dans laquelle:

- Y représente un groupe fonctionnel (fonction "Y") qui est capable de se lier physiquement et/ou chimiquement à la charge blanche, une telle liaison pouvant être établie, par exemple, entre un atome de silicium de l'agent de couplage et les groupes hydroxyle (OH) de surface de la charge blanche (par exemple les silanols de surface lorsqu'il s'agit de silice);

- X représente un groupe fonctionnel (fonction "X") capable de se lier physiquement et/ou chimiquement à l'élastomère, par exemple par l'intermédiaire d'un atome de soufre:
- T représente un groupe hydrocarboné permettant de relier Y et X.

Les agents de couplage ne doivent en particulier pas être confondus avec de simples agents de recouvrement de charge blanche qui de manière connue comportent la fonction Y active vis-à-vis de la charge blanche mais sont dépourvus de la fonction X active vis-à-vis de l'élastomère.

De tels agents de couplage, d'efficacité variable, ont été décrits dans un très grand nombre de documents ; on se reportera par exemple aux brevets US-A-3 842 111, US-A-3 873 489, US-A-3 978 103, US-A-3 997 581, US-A-4 002 594 ou aux brevets plus récents US-A-5 580 919, US-A-5 583 245, US-A-5 663 396, US-A-5 684 171, US-A-5 684 172, US-A-5 696 197, qui décrivent en détail de tels composés connus.

On peut utiliser en fait tout agent de couplage connu pour assurer efficacement, dans les compositions de caoutchouc diénique utilisables pour la fabrication de pneumatiques, la liaison ou couplage entre silice et élastomère diénique, tels que des organosilanes, en particulier des alkoxysilanes polysulfurés comme les polysulfures, notamment les tétrasulfures, de bis(trialkoxyl($C_1$-$C_4$)-silylpropyl), en particulier de bis(3-triméthoxysilylpropyl) ou de bis(3-triéthoxysilylpropyl). On utilise en particulier le tétrasulfure de bis(3-triéthoxysilylpropyl), en abrégé TESPT, de formule $[(C_2H_5O)_3Si(CH_2)_3S_2]_2$, commercialisé par exemple par la société Degussa sous la dénomination Si69.

L'homme du métier saura ajuster la teneur en agent de couplage en fonction de l'application visée, de la nature du polymère mis en oeuvre, et de la quantité de charge blanche renforçante totale utilisée.

De manière à tenir compte des différences de surface spécifique et de densité des charges blanches renforçantes susceptibles d'être utilisées, ainsi que des masses molaires des agents de couplage, il est préférable de déterminer le taux optimal d'agent de couplage en moles par mètre carré de charge blanche renforçante, pour chaque charge blanche utilisée ; ce taux optimal est calculé à partir du rapport pondéral [agent de couplage/charge blanche renforçante], de la surface BET de la charge et de la masse molaire de l'agent de couplage (notée $M$ ci-après), selon la relation suivante:

$$(\text{moles/m}^2 \text{ charge blanche}) = [\text{agent de couplage/charge blanche}] \, (1/\text{BET}) \, (1/M)$$

Préférentiellement, la quantité d'agent de couplage utilisée dans les compositions est comprise entre $10^{-7}$ et $10^{-5}$ moles par mètre carré de charge blanche renforçante totale, soit par mètre carré de charge alumineuse lorsque cette dernière constitue la seule charge blanche renforçante présente. Plus préférentiellement encore, la quantité d'agent de couplage est comprise entre $5.10^{-7}$ et $5.10^{-6}$ moles par mètre carré de charge blanche renforçante totale.

II-4. Additifs divers

Bien entendu, les compositions contiennent, outre les composés déjà décrits, tout ou partie des constituants habituellement utilisés dans les compositions de caoutchouc diénique destinées à la fabrication de pneumatiques, comme par exemple des plastifiants, des pigments, des antioxydants, des antiozonants, un système de réticulation à base soit de soufre, soit de donneurs de soufre et/ou de peroxyde et/ou de bismaléimides, des accélérateurs de vulcanisation, des huiles d'extension, etc ... A la charge blanche renforçante peut être également associée, si besoin est, une charge blanche conventionnelle non renforçante, comme par exemple des argiles, la bentonite, le talc, la craie, le kaolin, l'oxyde de titane.

Les compositions pourraient également contenir, en complément des agents de couplage décrits précédemment, des agents de recouvrement (seule la fonction Y est dans ce cas disponible) de la charge blanche renforçante, tels que par exemple des alkylalkoxysilanes, des polyols, des amines, voire des agents de couplage autres que ceux cités précédemment.

Bien entendu, les compositions peuvent être utilisées seules ou en coupage avec toute autre composition de caoutchouc utilisable pour la fabrication de pneumatiques.

II-5. Préparation des compositions

Les compositions de caoutchouc sont préparées en mettant en oeuvre les élastomères diéniques selon des techniques tout à fait connues de l'homme du métier, par exemple par travail thermomécanique en une ou deux étapes dans un mélangeur interne à palettes, suivi d'un mélangeage sur mélangeur externe.

Selon un procédé classique en une étape, par exemple, on introduit dans un mélangeur interne usuel tous les constituants nécessaires à l'exception du système de vulcanisation ; lorsque la densité apparente de la charge est faible, il peut être préférable de fractionner son introduction en plusieurs parties. Le résultat de cette première étape de mélangeage est repris ensuite sur un mélangeur externe, généralement un mélangeur à cylindres, et on y ajoute alors le système de vulcanisation. Une seconde étape peut être ajoutée dans le mélangeur interne, essentiellement dans le but de faire subir au mélange un traitement thermo-mécanique complémentaire.

### III. EXEMPLES DE REALISATION

III-1. Synthèse des charges alumineuses

La synthèse des charges alumineuses utilisées dans les exemples de réalisation qui suivent est réalisée conformément aux indications données au paragraphe II-2 du chapitre II précédent, selon les conditions particulières qui suivent.

1) produits A-B-C (conformes)

Dans un réacteur d'un litre, on ajoute en plusieurs fois 150 ml (millilitres) d'une solution de carbonate d'ammonium $(NH_4)_2CO_3$ (pureté à 30-33% de $NH_3$, commercialisé par la société Merck), de concentration égale à 5,22 mol/l (moles par litre), à 350 ml d'une solution de sulfate d'aluminium $Al_2(SO_4)_3,16H_2O$ (commercialisé par la société Fluka), de concentration égale à 0,86 mol/l en $Al^{3+}$. La réaction est conduite sous forte agitation (400 tours/min) à une température régulée de 35°C ; au bout de 45 min d'agitation, la suspension est filtrée ; son pH final est d'environ 10 à 11. Le produit est alors lavé avec de l'eau jusqu'à un pH égal à 8, filtré puis redispersé dans 400 ml d'eau et enfin soumis à une maturation de 12 heures à 23°C. Le produit est alors filtré, congelé rapidement à -18°C puis lyophilisé (appareillage Christ Alpha 2-4 commercialisé par la société Bioblock) selon le cycle suivant: (i) séchage principal à -10°C pendant 12 heures sous une pression de 1,030 mbar ; puis (ii) séchage final à 0°C, pendant 12 heures sous une pression de 0.001 mbar.

A partir du produit précurseur ainsi obtenu, on fabrique trois charges alumineuses (produits notés ci-après A, B et C) de la manière suivante:

- produit A: le produit précurseur est séché à l'étuve à 125°C pendant 24 heures, puis calciné sous air à 300°C pendant 1 heure dans un four à moufle (four type Carbolite RHF14/8 commercialisé par la société Osi), avec une rampe de montée en température de 10°C/min. On obtient ainsi après calcination, à chaque lot de préparation, environ 17,5 g de poudre d'oxyhydroxyde d'aluminium répondant, aux précisions de l'analyse près, à la formule $Al(OH)_{1.60}O_{0.71}$.

- produit B: le produit B est obtenu directement par étuvage du produit précurseur à 125°C pendant 24 heures. On obtient ainsi environ 20,5 g de poudre d'hydroxyde d'aluminium répondant à la formule $Al(OH)_{2.99}O_{0.07}$, ce qui correspond pratiquement à un tri-hydroxyde d'aluminium.

- produit C: le produit C est obtenu par calcination du produit précurseur, sous air, à 500°C pendant 3 heures dans un four tubulaire (four Carbolite type CTF15/75 610 commercialisé par la société Osi), avec une rampe de montée en température de 10°C/min. On obtient ainsi environ 16,5 g de poudre d'oxyhydroxyde d'aluminium répondant à la formule $Al(OH)_{1.13}O_{0.95}$.

2) produit D (conforme)

Le précurseur du produit D est préparé comme indiqué précédemment pour le produit précurseur des charges A, B et C, à l'exception près que le sulfate d'aluminium est remplacé par du nitrate d'aluminium $Al(NO_3)_3.9H_2O$ (commercialisé par la société Fluka). Le produit D est obtenu par calcination de ce précurseur sous air à 400°C pendant 2 heures dans un four à moutle (four type Carbolite RHF14/8 commercialisé par la société Osi) avec une rampe de montée en température de 10°C/min. On obtient ainsi environ 16 g de poudre d'oxyhydroxyde d'aluminium répondant à la formule $Al(OH)_{1.02}O_{0.99}$.

3) produit E (conforme)

La synthèse est identique à celle des produits A, B et C précédents aux différences près qui suivent. Après l'étape de maturation du produit (12 heures à 23°C), le volume de suspension est porté à 750ml. La suspension est alors atomisée (appareil Büchi - "mini-spray-dryer" B-191- commercialisé par la société Bioblock) selon les conditions suivantes : température de 200°C, aspiration 90%, pompe 20%. Après séchage à l'atomiseur le produit est calciné sous air à 200°C dans un four à moufle (four type Carbolite RHF 14/8) pendant 3 heures, avec une rampe de montée en température de 10°C/min. On obtient ainsi environ 16,5 g de poudre d'oxyhydroxyde d'aluminium répondant à la formule $Al(OH)_{1.73}O_{0.63}$.

## 4) produit F (non conforme)

Le précurseur du produit F est préparé comme indiqué ci-dessus pour les précurseurs des charges A, B et C, à la différence près, qu'après l'étape de maturation de 12 heures à 23°C, on procède de la manière suivante: le produit est alors filtré et placé à l'étuve sous vide à 80°C pendant 24 heures ; le produit ainsi séché est légèrement broyé au mortier, puis placé à l'étuve 18 heures à 125°C et 6 heures à 140°C. On obtient environ 18g de produit répondant à la formule $Al(OH)_{1.88}O_{0.56}$.

On note que ce produit est préparé selon un procédé non conforme, puisque l'étape (iii) de séchage du filtrat est conduite de manière triviale (étuve sous vide à 80°C, pendant 24 heures) sans utiliser un moyen de séchage spécifique, tel qu'une cryolyophilisation, apte à limiter l'agglomération des particules d'hydroxyde, par capillarité, lors de l'élimination de l'eau.

## 5) produit G (conforme)

La synthèse est identique à celle des produits A, B et C à la différence près que le précurseur est calciné sous air à 200°C dans un four à moufle (Carbolite RHF 14/8) pendant 3 heures, avec une rampe de montée en température de 10°C/min. On obtient ainsi environ 17 g d'un produit répondant à la formule $Al(OH)_{1.52}O_{0.74}$.

## 6) produit H (non conforme)

Il s'agit d'un hydroxyde d'aluminium $Al(OH)_3$ commercialisé par la société Riedel-de-Haen (Référence : 11033).

## 7) produit I (non conforme)

Ce produit a été préparé par une voie sol-gel conventionnelle telle que décrite par exemple dans "*Sol-Gel Science*", C.J. Brinker, G.W. Scherer, Academic Press 1990 ; il répond à la formule $Al(OH)_{1.63}O_{0.69}$.

Les caractéristiques des produits A à I ainsi obtenus sont résumées dans le tableau 1.

Les produits F. H et I sont non conformes pour les raisons suivantes: le produit F présente une taille $d_w$ trop élevée et une vitesse $\alpha$ trop faible ; le produit H présente des caractéristiques de surface BET. de taille $d_w$ et de vitesse $\alpha$ qui sont toutes trois en dehors des fourchettes préconisées ; le produit I présente une taille $d_w$ trop élevée.

Les produits A, B, C, D, E et G sont tous conformes ; ils présentent en particulier une vitesse de désagglomération $\alpha$ supérieure à la limite inférieure fixée de $5.10^{-3}$ $\mu m^{-1}$/s (soit 2/3 de $\alpha_0$).

Les vitesses $\alpha$ mesurées sur ces produits conformes doivent être considérées comme particulièrement élevées, puisque le test de désagglomération aux ultrasons appliqué à une silice témoin hautement dispersible (Zeosil 1165MP commercialisée par la société Rhône-Poulenc) conduit à une vitesse $\alpha$ d'environ $7,5.10^{-3}$ $\mu m^{-1}$/s (notée $\alpha_o$), soit une vitesse intermédiaire entre celles mesurées sur le produit E (environ 75% de $\alpha_o$), les produits C et D (environ 90% de $\alpha_o$) et celles mesurées sur les produits A (environ 130% de $\alpha_o$), B (environ 140% de $\alpha_o$) et G (environ 160% de $\alpha_o$). On note en particulier que, conformément à un mode préférentiel, la vitesse de désagglomération $\alpha$ mesurée sur la majorité des produits conformes est supérieure à $6.10^{-3}$ $\mu m^{-1}$/s (soit 80% de $\alpha_o$), au moins égale à $\alpha_o$ pour les produits A, B et G.

L'analyse par diffraction X révèle par ailleurs que les produits A, B, E et G ont une structure amorphe (simple halo diffus sur un diffractogramme de poudre), alors que les produits C et D montrent une structure très mal cristallisée, quasi-amorphe (quelques anneaux de diffraction mal définis).

## III-2. Préparation des compositions

Les compositions testées ci-après sont préparées de manière connue dans des mélangeurs de laboratoire, de la manière suivante : on introduit l'élastomère diénique dans un mélangeur interne rempli à 75 % et dont la température est d'environ 70°C, puis après un temps approprié de malaxage, par exemple de l'ordre de 1 minute, on ajoute tous les autres ingrédients, y compris la charge (en une ou plusieurs fois) et le cas échéant l'agent de couplage associé, à l'exception du système de vulcanisation. On conduit alors un travail thermomécanique d'une durée de 12 minutes environ, avec une vitesse moyenne des palettes de 70 tours/min, jusqu'à obtenir une température de tombée d'environ 140°C. On récupère le mélange ainsi obtenu puis on ajoute le système de vulcanisation sur un mélangeur externe (homo-finisseur) à 30°C. La vulcanisation est effectuée à 150°C.

III-3. Essais

1) série 1 (compositions No1 à No5)

On compare ci-après cinq compositions de caoutchouc diénique destinées à la fabrication de pneumatiques ou de bandes de roulement pour pneumatiques. L'élastomère SBR (copolymère de styrène-butadiène) est un SBR préparé en solution, et comprend 25% de styrène, 58% de motifs polybutadiène 1-2 et 23 % de motifs polybutadiène 1-4 trans.

Ces cinq compositions sont identiques aux différences près qui suivent:

- composition No1 : charge renforçante conventionnelle (charge noire) constituée par un noir de carbone type N234;
- composition No2 : charge blanche renforçante constituée par une silice hautement dispersible (silice Rhône-Poulenc Zeosil 1165MP);
- composition No3 : charge blanche renforçante constituée par le produit A:
- composition No4 : charge blanche renforçante constituée par le produit B;
- composition No5 : charge blanche constituée par le produit H.

Pour chaque composition, la quantité de charge (renforçante ou non) a été ajustée, en fonction de la densité, de manière à maintenir constant le pourcentage volumique de cette charge. D'autre part, l'agent de couplage Si69 a été introduit à un taux correspondant à une couverture de surface identique pour la silice et les produits A et B, soit un taux d'environ $9,3.10^{-7}$ mole/m$^2$ de charge blanche renforçante, sauf pour le produit H dont la très faible surface BET a conduit inévitablement à l'utilisation d'un fort excès d'agent de couplage.

Seules les compositions No3 et No4 sont donc conformes. Les tableaux 2 et 3 donnent successivement la formulation des différentes compositions (tableau 2 - taux des différents produits exprimés en pce), leurs propriétés avant et après cuisson à 150°C pendant 40 minutes (tableau 3). La figure 1 reproduit les courbes de module (en MPa) en fonction de l'allongement (en %) ; ces courbes sont notées C1 à C5 et correspondent respectivement aux compositions No1 à No5.

L'étude de ces différents résultats conduit aux observations suivantes:

- les valeurs de plasticité Mooney sont suffisamment basses et relativement proches pour les compositions No1 à No4, révélatrices d'une bonne aptitude à la mise en oeuvre à cru quelle que soit la composition No 1 à No4 considérée;

- les compositions conformes (No3 et No4) présentent des modules M100 et M300, indicateurs pour l'homme du métier de la qualité de renforcement, supérieurs à ceux obtenus sur les compositions témoins No 1 (noir de carbone) et No2 (silice), ce qui laisse présager une résistance à l'usure particulièrement avantageuse pour des bandes de roulement de pneumatiques comportant une telle composition conforme à l'invention ; les valeurs de module sont extrêmement faibles pour la composition No5 non conforme (charge H);

- la figure 1 confirme les observations précédentes: la composition No3 (courbe C3) révèle une performance en renforcement équivalente à faible allongement, puis supérieure aux allongements plus importants, comparée à celles de la composition No1 (noir de carbone ; courbe C1) et de la composition No2 (silice ; courbe C2) ; la composition No4 (courbe C4) montre des performances sensiblement équivalentes à celles des charges renforçantes connues (silice et noir de carbone) ; quant à la composition No5 (courbe C5), on voit à l'évidence que la charge H non conforme ne peut prétendre à la qualité de charge renforçante;

- corrélativement, le taux de couplage charge/élastomère (illustré par le test dit de "bound rubber") obtenu avec la charge A apparaît non seulement supérieur à celui atteint avec la charge siliceuse, mais encore supérieur à celui obtenu avec la charge noire conventionnelle ; le taux de couplage pour la charge B est également très satisfaisant puisque intermédiaire entre ceux observés avec la silice et le noir de carbone ; la mesure de "bound rubber" a été impossible pour la composition No5 en raison d'un délitage (cohésion insuffisante) de cette dernière (produit H non conforme);

- on constate par ailleurs que les compositions conformes (No3 et No4) présentent des propriétés hystérétiques très avantageuses, comparées en particulier à celles offertes par la silice hautement dispersible, avec une diminution très sensible des pertes par rebond (PH), de la non-linéarité $\Delta G^*$ et de $\tan(\delta)_{max}$, ce qui laisse présager une résistance au roulement particulièrement basse pour des bandes de roulement de pneumatiques comportant une telle composition conforme ;

- on note enfin que la charge A de la composition No3 (a<3 dans la formule (I) - oxyhydroxyde d'aluminium), comparée à la charge B de la composition No4 (a=3 dans la formule (I) - trihydroxyde d'aluminium), offre des performances supérieures: modules M100 et M300 plus élevés (renforcement supérieur), taux de couplage charge/élastomère ("bound rubber") supérieur.

2) série 2 (compositions No6 à No9)

On compare ci-après quatre autres compositions de caoutchouc diénique destinées également à la fabrication de pneumatiques ou de bandes de roulement de pneumatiques. L'élastomère SBR est identique à celui utilisé pour les compositions précédentes.
Ces quatre compositions sont identiques aux différences près qui suivent:

- composition No6 : noir de carbone de type N234;
- composition No7 : silice Rhône-Poulenc Zeosil 1165MP;
- composition No8 : charge blanche renforçante constituée par le produit C:
- composition No9 : charge blanche constituée par le produit I.

Comme pour les exemples précédents, la quantité de charge (renforçante ou non) a été ajustée, en fonction de la densité, de manière à maintenir constant le pourcentage volumique de cette charge ; d'autre part, l'agent de couplage Si69 a été introduit à un taux correspondant à une couverture de surface identique pour toutes les charges blanches, soit un taux d'environ $9.3.10^{-7}$ mole/m$^2$ de charge blanche.
Seule la composition No8 est donc conforme. Les tableaux 4 et 5 donnent successivement la formulation des différentes compositions (tableau 4 - taux des différents produits exprimés en pce), leurs propriétés avant et après cuisson à 150°C pendant 40 minutes (tableau 5) ; les valeurs de modules M10, M100 et M300 indiquées dans le tableau 5 ont ici été mesurées en première élongation (i.e. sans cycle d'accomodation). La figure 2 reproduit les courbes de module (en MPa) en fonction de l'allongement (en %) ; ces courbes sont notées C6 à C9 et correspondent respectivement aux compositions No6 à No9.
L'étude de ces différents résultats conduit aux observations suivantes:

- la composition conforme (No8) présente des modules M100 et M300 supérieurs à ceux obtenus sur les compositions témoins No6 (noir de carbone) et No7 (silice), ce qui laisse présager une résistance à l'usure particulièrement avantageuse pour des bandes de roulement de pneumatiques comportant une telle composition conforme à l'invention;

- la figure 2 confirme les observations précédentes : la composition No8 (courbe C8) conforme révèle une performance en renforcement équivalente à faible allongement, puis rapidement supérieure aux allongements plus importants, comparée à celles de la composition No6 (noir de carbone ; courbe C6) et de la composition No7 (silice ; courbe C7);

- corrélativement, le taux de couplage charge/élastomère ("bound rubber") obtenu avec la charge C (composition No8) est non seulement supérieur à celui atteint avec la charge siliceuse, mais encore supérieur à celui obtenu avec la charge noire conventionnelle;

- enfin, en ce qui concerne la composition No9, à base d'une charge alumineuse non conforme, les valeurs des modules M100 et M300 (tableau 5) sont extrêmement faibles, signe d'un renforcement inexistant, comme l'illustre également la courbe C9 de la figure 2 ; ceci est également bien corrélé au résultat du test de "bound rubber" (mesure impossible en raison d'un délitage - cohésion insuffisante - de la composition No9) ; clairement, le produit I n'est pas une charge renforçante.

Ainsi, de manière inattendue, les charges alumineuses conformes montrent une performance supérieure dans la majorité des cas à celle d'une silice précipitée hautement dispersible, pour une même proportion volumique de charge blanche.
Une lecture rapide des figures 1 et 2 montre bien en effet que:

- les meilleurs résultats (courbes C3 et C8) sont supérieurs à ceux observés avec des compositions de l'art antérieur renforcées de noir de carbone (courbes C1 ou C6) ou d'une silice précipitée hautement dispersible (courbes C2 ou C7);

- ces très bons résultats des courbes C3 et C8 correspondent aux compositions renforcées par des oxyhydroxydes (a < 3), plus précisément dans le cas présent des oxyhydroxydes vérifiant la relation préférentielle a < 2 ;

- les résultats obtenus avec les tri-hydroxydes (a=3) sont néanmoins tout à fait satisfaisants lorsqu'ils sont comparés à ceux obtenus avec les charges de l'art antérieur (comparer courbe C4 aux courbes C1 et C2 de la figure 1).

Grâce à leurs propriétés morphologiques particulières, les charges alumineuses conformes offrent ainsi une alternative tout à fait avantageuse à l'emploi de silices hautement dispersibles.

Les compositions en discussion sont ainsi susceptibles de conférer, notamment aux bandes de roulement des pneumatiques, non seulement les propriétés habituelles apportées par des charges blanches, c'est-à-dire une faible résistance au roulement et une adhérence améliorée sur sol sec, humide ou enneigé, mais encore une résistance à l'usure au moins égale à celle obtenue avec des compositions chargées conventionnellement avec un noir de carbone.

### IV. DISPOSITIF ET METHODE SELON L'INVENTION

Le test de désagglomération aux ultrasons décrit au paragraphe 1-1-c) et utilisé pour la caractérisation des charges A à 1 décrites dans les exemples précédents du chapitre III constitue l'application directe d'une méthode et d'un dispositif de mesure qui constituent les objets de la présente invention.

Il est à noter que la méthode et le dispositif de l'invention décrits ci-après s'appliquent à tout type de charge, renforçante ou non. Ils ne sont en particulier pas limités à la charge alumineuse renforçante décrite précédemment ; ils ne sont pas limités non plus au cas de charges destinées à renforcer des compositions de caoutchouc.

IV-1. Méthode de l'invention

L'invention a pour objet une méthode de mesure de la vitesse de désagglomération aux ultrasons d'une charge se présentant sous la forme d'agglomérats de particules, par mesure en continu de l'évolution de la taille de ces agglomérats durant une opération de cassage des agglomérats, en particulier par sonification.

Cette méthode de l'invention comporte les étapes suivantes:

- (a) on introduit la charge dans un liquide de manière à former une suspension liquide homogène:

- (b) on fait circuler cette suspension liquide sous la forme d'un flux à travers un circuit comportant des moyens de cassage qui, au passage du flux, cassent les agglomérats et un granulomètre laser qui, à intervalles de temps "t" réguliers, mesure la taille "d" de ces agglomérats;
- (c) on enregistre ainsi l'évolution de la taille "d" en fonction du temps "t";
- (d) on en déduit la vitesse de désagglomération ou un paramètre lié à cette vitesse.

Par "taille" d d'agglomérats, on entend tout paramètre de taille pouvant être déduit de la distribution de taille en volume mesurable par le granulomètre laser, qu'il s'agisse par exemple de cette distribution de taille elle-même, d'un mode de distribution, de la taille moyenne, de la taille médiane ou de tout autre indicateur de taille, ces différents paramètres étant déterminés pour l'ensemble ou une partie seulement des agglomérats (par exemple pour une classe de taille déterminée) présentes dans la suspension de charge analysée.

De manière préférentielle, le paramètre de taille utilisé est la taille moyenne en volume des agglomérats (de l'ensemble des agglomérats), notée $d_v$ dans la présente demande, conformément par exemple au test de désagglomération aux ultrasons précédemment décrit. Dans ce cas, la vitesse de désagglomération, alors notée "$\alpha$", est représentée par la pente de la droite $[1/d_v(t) = f(t)]$ enregistrée par la chaîne de mesure du granulomètre, dans une zone de régime stable de désagglomération.

Le liquide utilisé peut être tout liquide susceptible de former une suspension liquide de la charge testée. On peut utiliser de l'eau ou tout liquide plus approprié au cas particulier considéré, par exemple directement la matrice liquide à laquelle est destinée le cas échéant la charge testée. L'eau peut éventuellement être additionnée d'un agent tensioactif de façon à stabiliser la suspension, ce tensioactif pouvant être anionique, cationique ou neutre selon la nature de la charge.

La concentration de charge dans la suspension liquide peut varier dans une large mesure selon la nature de la charge à étudier et de ses propriétés optiques. Pour la caractérisation de charges renforçantes utilisables dans des compositions de caoutchouc pour pneumatiques, par exemple, cette concentration peut varier par exemple entre 0,001 et 10 grammes de charge par litre de liquide. Elle sera ajustée empiriquement de manière à obtenir un signal exploitable tout au long de l'opération de cassage ; de façon générale, la concentration utilisée est plus élevée lorsque l'indice de réfraction est plus proche de celui du liquide de suspension (cas des silices par exemple, par rapport à l'eau) ; elle est plus basse lorsque l'indice de réfraction est plus éloigné (cas des noirs de carbone par exemple, par rapport à l'eau).

La température de la suspension peut être la température ambiante (environ 20°C) ou une température différente, par exemple la température réelle utilisée lors de la dispersion de la charge dans sa matrice d'application.

La circulation du flux de suspension liquide, dans le circuit de mesure, est bien entendu réalisée à une vitesse réglée et constante pendant toute la mesure. Une vitesse de l'ordre du litre ou de quelques litres par minute est en général suffisante pour réaliser une mesure de "d" qui soit statistiquement satisfaisante. Cette vitesse sera bien sûr ajustée en fonction des conditions particulières de mise en oeuvre de l'invention.

Bien entendu, une mesure du bruit de fond préalable est réalisée en faisant circuler le liquide de suspension seul dans le circuit, avant introduction de la charge à tester dans le dit liquide.

Après un nombre de mesures de "d" suffisant, la vitesse de désagglomération (ou autre paramètre lié à cette vitesse) peut être déduite de la pente de la droite [1/d(t) = $f$ (t)] enregistrée par la chaîne de mesure du granulomètre, dans une zone de régime stable de désagglomération. On peut bien sûr utiliser aussi tout autre paramètre lié à la vitesse de désagglomération et utilisable lui aussi comme critère de discrimination pour la sélection de charges, notamment de charges renforçantes de compositions de caoutchouc pour pneumatiques.

L'homme du métier pourra mettre en oeuvre la méthode de l'invention avec différents moyens de cassage aptes à désagglomérer en continu les agglomérats de particules de la charge à tester, dans le liquide de suspension : à titre d'exemples, on citera une sonde ou une cuve ultrasons, des moyens de cassage mécaniques tels que par exemple un homogénéiseur ou tout autre moyen de dispersion approprié.

L'invention est préférentiellement mise en oeuvre à l'aide d'une sonde ultrasons. Un exemple particulier de mise en oeuvre de la méthode de l'invention est illustré par le test de désagglomération aux ultrasons décrit au paragraphe I-1-c) précédent et utilisé pour la caractérisation des charges A à I, renforçantes ou non, décrites dans les exemples de réalisation du chapitre III précédent.

A titre d'exemple, la figure 4 reproduit la courbe [1/d$_v$(t) = $f$(t)] enregistrée pour la charge A dans les conditions particulières de ce test de désagglomération. On voit bien sur cette figure 4 que les premiers points enregistrés ("t" variant de 0 à 30 s environ) correspondent à la mesure du diamètre initial d$_v$[0], suivie (après mise en action de la sonde ultrasons) d'un passage progressif (ici, "t" de 30 s à 3 min environ) à un régime stable de désagglomération pendant lequel l'inverse de "d$_v$" varie bien linéairement avec le temps "t" ; l'enregistrement des données est stoppé ici au bout de 8 minutes environ. On en déduit par un calcul élémentaire de régression linéaire, pris en charge par le calculateur du granulomètre, la vitesse de désagglomération $\alpha$ (9,8 10$^{-3}$ $\mu$m$^{-1}$/s) dans la zone de régime stable de désagglomération.

La méthode de mesure de l'invention est de préférence mise en oeuvre à l'aide d'un dispositif de mesure tel que décrit ci-après.

## IV-2. Dispositif de l'invention

La méthode précédente peut être mise en oeuvre à l'aide d'un dispositif nouveau selon la revendication 1, constituant un objet de l'invention.

Comme exemples de moyens de cassage aptes à désagglomérer avec une puissance suffisante les agglomérats de particules, dans leur liquide de suspension, on citera une sonde ultrasons placée dans la cellule de traitement, une cuve ultrasons entourant la cellule de traitement, ou des moyens de cassage mécaniques tels que par exemple un homogénéiseur ou autre moyen de dispersion approprié. On utilise de préférence une sonde ultrasons placée dans la cellule de traitement.

Un exemple de dispositif de mesure selon l'invention a été représenté à titre d'exemple préférentiel sur la figure 3. Il consiste en un circuit fermé 1 dans lequel peut circuler un flux 2 d'agglomérats de particules en suspension dans un liquide 3. Ce dispositif comporte essentiellement un préparateur d'échantillon 10. un granulomètre laser 20 et une cellule de traitement 30 pourvue d'une sonde ultrasons 35, dont la description détaillée suit.

## a) préparateur d'échantillon

Le préparateur d'échantillon 10 est destiné à recevoir l'échantillon de charge à tester (telle quelle ou déjà en suspension dans le liquide 3) et à l'envoyer à travers le circuit 1, à une vitesse réglée (potentiomètre 17), sous la forme d'un flux 2 de suspension liquide.

Ce préparateur 10 consiste simplement en une cuve qui contient, et à travers laquelle circule, la suspension à analyser ; afin d'éviter une sédimentation des agglomérats de particules de la suspension, une agitation continue est prévue à l'aide d'un moteur 15 à vitesse modulable ; une mini-pompe centrifuge 16 est destinée à assurer la circulation de la suspension 2 dans le circuit 1 ; l'entrée 11 du préparateur 10 est reliée à l'air libre via une ouverture 13 destinée à recevoir l'échantillon de charge à tester et/ou le liquide 3 utilisé pour la suspension.

Pour la mise en oeuvre de l'invention, on utilise par exemple un préparateur d'échantillon du type "Malvern Small Sample Unit MSX1", commercialisé par la société Malvern Instruments.

b) granulomètre laser

Au préparateur ci-dessus est connecté un granulomètre laser 20 dont la fonction est de mesurer en continu, à intervalles de temps réguliers, la taille d des agglomérats, au passage du flux 2, grâce à une cellule de mesure 23 à laquelle sont couplés les moyens d'enregistrement et de calcul automatiques du granulomètre 20.

On rappelle ici que les granulomètres laser exploitent, de manière connue, le principe de la diffraction de la lumière par des objets solides mis en suspension dans un milieu dont l'indice de réfraction est différent de celui du solide. Selon la théorie de Fraunhofer, il existe une relation entre la taille des objets et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, à partir de laquelle est déterminée par exemple la taille $d_v$ correspondant à la moyenne de cette distribution ($d_v = \Sigma(n_i d_i^4) / \Sigma(n_i d_i^3)$ avec $n_i$ nombre d'objets de la classe de taille $d_i$).

Des granulomètres laser et leur principe de fonctionnement ont par exemple été décrits dans les brevets ou demandes de brevets EP-A-0 465 205, EP-A-0 559 529, FR-A-2 713 773, GB-A-2 203 542.

Pour la mise en oeuvre de l'invention, on utilise par exemple le granulomètre laser type "Mastersizer S" commercialisé par la société Malvern Instruments, équipé d'une source laser He-Ne émettant dans le rouge (longueur d'onde 632,8 nm).

c) cellule de traitement

Intercalée entre le préparateur 10 et le granulomètre laser 20 se trouve enfin la cellule de traitement 30 équipée d'une sonde ultrasons 35 (convertisseur 34 et tête de sonde 36) destiné à casser en continu les agglomérats de particules au passage du flux 2.

La cellule de traitement 30 est disposée entre la sortie 22 du granulomètre 20 et l'entrée 11 du préparateur 10, de telle manière que, en fonctionnement, le flux 2 d'agglomérats de particules sortant du préparateur 10 traverse le granulomètre laser 20 avant d'entrer dans la cellule de traitement 30. Cette disposition a deux avantages majeurs pour les mesures : d'une part, les bulles dues à la sonification (action de la sonde ultrasons) sont éliminées à la traversée du préparateur 10 (qui est à l'air libre), c'est-à-dire avant l'entrée dans le granulomètre 20 ; elles ne perturbent donc pas la mesure de diffraction laser ; d'autre part, l'homogénéité de la suspension est améliorée par un passage préalable dans le préparateur 10.

Selon un mode préférentiel de l'invention, la cellule de traitement 30 est agencée de telle manière que, en fonctionnement, le flux 2 de particules qui y pénètre, par une entrée 31, passe d'abord devant la tête 36 de la sonde ultrasons 35. Ainsi, la cellule de traitement 30 représentée à la figure 3 est utilisée de façon non conventionnelle : le flux 2 entre par le bas 31 de la cellule (et non par le haut 32), ce qui est contraire aux recommandations du constructeur. Cette configuration présente pourtant, pour la mesure de la vitesse de désagglomération, deux avantages importants : d'une part, toute la suspension circulante 2 est forcée de passer devant l'extrémité 36 de la sonde ultrasons 35, zone la plus active en termes de désagglomération ; d'autre part, cette disposition permet un premier dégazage après sonification dans le corps de la cellule de traitement 30 elle-même, la surface de la suspension 2 étant alors en contact avec l'atmosphère au moyen d'un tuyau 33 de faible diamètre.

La puissance de la sonde ultrasons 35 (plus généralement des moyens de cassage) sera bien entendu ajustée en fonction de la nature de la charge à étudier et des vitesses de désagglomération attendues pour ce type de charge, de manière à pouvoir réaliser le cycle complet de mesures de "d", nécessaire à la détermination de la vitesse de désagglomération, dans un temps raisonnable, par exemple d'une dizaine de minutes (par exemple enregistrement d'une mesure de "d" toutes les 10 secondes environ).

Pour la caractérisation de charges renforçantes destinées aux compositions de caoutchouc de pneumatique, on utilise de préférence une sonde ultrasons dont la puissance est dans une gamme de 10 à 2000 W ; on a constaté qu'une puissance de 10-20 W pouvait être suffisante pour certains noirs de carbone, alors que des puissances de 300 à 1000 W sont plus adaptées à certaines charges blanches telles que des charges siliceuses ou alumineuses qui, de manière connue, sont plus difficilement dispersibles en raison d'interactions plus importantes entre particules (agrégats). Bien évidemment, les résultats obtenus avec des puissances de sonification différentes ne peuvent pas être directement comparés.

Pour la mise en oeuvre de l'invention, on utilise par exemple une cellule de traitement type "M72410" munie d'une sonde ultrasons (sonificateur type "Vibracell 1/2 pouce") d'une puissance maximale de 600 W, commercialisées toutes deux par la société Bioblock.

d) autres éléments

Dans le dispositif selon l'invention, au moins une mise à l'air libre est utilisée pour permettre l'élimination en continu des bulles d'air qui se forment durant la sonification (plus généralement au cours de l'opération de cassage). De telles mises à la pression atmosphérique (13, 33) sont par exemple présentes, sur la figure 3, au niveau du préparateur d'échantillon 10 et de la cellule de traitement 30 elle-même.

Bien que cela ne soit pas indispensable, on préfère que le flux 2 soit thermostaté, par exemple par l'intermédiaire d'un circuit de refroidissement 40 disposé, au niveau de la cellule 30, dans une double enveloppe entourant la sonde 35, la température étant contrôlée par exemple par une sonde de température 14 plongeant dans le liquide 3 au niveau du préparateur 10.

La disposition des différents éléments du dispositif de mesure est enfin optimisée de façon à limiter autant que possible le volume circulant, c'est-à-dire la longueur des tuyaux de raccordement (par exemple des tuyaux souples). Le volume total de suspension liquide est celui nécessaire au remplissage du circuit 1 (de préférence moins de 200 ml, par exemple 160 ml pour le test de désagglomération décrit au paragraphe 1-1-c) précédent).

e) automatisation des mesures

Une automatisation de la mesure, du calcul et de la sauvegarde des résultats a été réalisée au moyen du langage Basic Malvern disponible sur le programme de contrôle du granulomètre "Mastersizer S" cité précédemment. Cette automatisation consiste essentiellement à réaliser les opérations suivantes:

- saisie de l'identification du produit;
- alignement du système optique du laser;
- mesure du bruit de fond;
- introduction de l'échantillon de charge (poudre fine) dans le préparateur;
- lancement du cycle de mesures dès que l'obscuration du signal du faisceau dépasse 1% (i.e. moins de 99% de transmission);
- réalisation de 70 cycles (mesure, calcul de la distribution de taille (en volume), sauvegarde de la distribution, du temps écoulé et du diamètre moyen en volume $d_v$);
- calcul automatique de $\alpha$;
- enregistrement de l'ensemble des données;
- arrêt.

IV-3. Evaluation de la dispersibilité d'une charge

La méthode et le dispositif de l'invention décrits ci-dessus sont avantageusement utilisés pour l'évaluation de la dispersibilité intrinsèque d'une charge, la vitesse de désagglomération (ou tout autre paramètre lié à cette vitesse) étant alors avantageusement utilisée comme critère de discrimination pour la sélection de charges, notamment de charges renforçantes de compositions de caoutchouc pour pneumatiques.

On a en effet constaté qu'il existait une très bonne corrélation entre la vitesse de désagglomération mesurée selon la méthode de l'invention et la dispersibilité d'une charge, c'est-à-dire son aptitude à se disperser dans une matrice donnée.

On rappelle que le pouvoir renforçant d'une charge, vis-à-vis d'une matrice caoutchouteuse, est étroitement corrélé à sa dispersibilité. En d'autres termes, la mesure de la vitesse de désagglomération selon la méthode revendiquée, associée à celles des surfaces BET et de taille $d_w$ des particules, permet d'évaluer a priori le potentiel renforçant de différentes charges et de pouvoir classer rapidement ces dernières, sans qu'il soit nécessaire de fabriquer des compositions de caoutchouc, de leur incorporer les charges puis de tester mécaniquement les compositions ainsi chargées.

L'homme du métier des charges, renforçantes ou non, saisira l'intérêt majeur de la méthode et du dispositif de l'invention pour un grand nombre d'applications autres que la caoutchouterie des pneumatiques, par exemple pour la caractérisation in situ d'une charge placée directement en suspension dans la matrice à laquelle elle est destinée, lorsque cette matrice est liquide.

Tableau 1

| Produit: | A | B | C | D | E | F | G | H | I |
|---|---|---|---|---|---|---|---|---|---|
| $H_2O$ (%) | 5.1 | 6.0 | 6.0 | 5.20 | 6.5 | 5.50 | 5.10 | 0.30 | 12.9 |
| Oxygène (%) | 55.40 | 60.24 | 53.19 | 55.00 | 57.43 | 58.58 | 56.03 | 61.94 | 60.38 |
| Aluminium (%) | 37.10 | 30.25 | 38.70 | 42.20 | 36.70 | 37.07 | 38.30 | 34.18 | 35.38 |
| Hydrogène (%) | 2.79 | 4.05 | 2.31 | 2.19 | 3.10 | 3.22 | 2.75 | 3.88 | 3.60 |
| Densité He (g/ml) | 2.46 | 2.33 | 2.55 | 2.55 | 2.41 | 2.59 | 2.34 | 2.41 | 2.32 |
| BET ($m^2$/g) | 281 | 222 | 149 | 298 | 138 | 336 | 174 | 1 | 198 |
| $d_w$ (nm) | 127 | 129 | 126 | 82 | 188 | 39550 | 88 | 8790 | 2830 |
| $\alpha$ ($\mu m^{-1}$/s) | 0.0098 | 0.0107 | 0.0068 | 0.0069 | 0.0057 | 0.0013 | 0.0118 | 0.0031 | 0.0072 |

Tableau 2

| Composition No: | 1 | 2 | 3 | 4 | 5 |
|---|---|---|---|---|---|
| SBR (1) | 100 | 100 | 100 | 100 | 100 |
| Noir de Carbone (2) | 50 | -- | -- | -- | -- |
| Silice(3) | -- | 52.5 | -- | -- | -- |
| Produit A | -- | -- | 61.5 | -- | -- |
| Produit B | -- | -- | -- | 58.3 | -- |
| Produit H | -- | -- | -- | -- | 60.3 |
| Si69 (4) | -- | 4.2 | 8.65 | 6.5 | 3.3 |
| ZnO | 2.5 | 2.5 | 2.5 | 2.5 | 2.5 |
| Acide stéarique | 2 | 2 | 2 | 2 | 2 |
| Antioxydant (5) | 1.9 | 1.9 | 1.9 | 1.9 | 1.9 |
| DPG (6) | 1.5 | 1.5 | 1.5 | 1.5 | 1.5 |
| Soufre | 1 | 1 | 1 | 1 | 1 |
| CBS (7) | 2 | 2 | 2 | 2 | 2 |

(1) copolymère de butadiène styrène;

(2) type N234;

(3) Zeosil 1165 MP (Rhône-Poulenc):

(4) bis(triéthoxysilylpropyle)tétrasulfure;

(5) N-1,3 diméthylbutyl N-phénylparaphénylènediam ine;

(6) Diphénylguanidine;

(7) N-cyclohexyl-2-benzothiazylsulfénamide.

Tableau 3

| Composition No: | 1 | 2 | 3 | 4 | 5 |
|---|---|---|---|---|---|
| Plasticité (UM) | 61 | 52 | 76 | 51 | 27 |
| Bound Rubber (%) | 33 | 24 | 36 | 28 | -- |
| M 10 (MPa) | 6.52 | 6.09 | 6.39 | 5.76 | 3.24 |
| M100 (MPa) | 4.87 | 5.07 | 6.80 | 6.2 | 2.37 |
| M300 (MPa) | 12.13 | 13.29 | 15.35 | 14.04 | 2.53 |
| PH (%) | 36.4 | 22.5 | 18.3 | 15.2 | 11.8 |

Tableau 3   (suite)

| Composition No: | 1 | 2 | 3 | 4 | 5 |
|---|---|---|---|---|---|
| ΔG* (MPa) | 5.58 | 2.34 | 1.47 | 0.81 | 0.25 |
| $\tan(\delta)_{max}$ | 0.343 | 0.247 | 0.218 | 0.202 | 0.154 |

Tableau 4

| Composition No: | 6 | 7 | 8 | 9 |
|---|---|---|---|---|
| SBR (1) | 100 | 100 | 100 | 100 |
| Noir de Carbone(2) | 50 | -- | -- | -- |
| Silice (3) | -- | 52.5 | -- | -- |
| Produit C | -- | -- | 63.8 | -- |
| Produit 1 | -- | -- | -- | 58 |
| Si69(4) | -- | 4.2 | 4.75 | 5.7 |
| ZnO | 2.5 | 2.5 | 2.5 | 2.5 |
| Acide stéarique | 2 | 2 | 2 | 2 |
| Antioxydant(5) | 1.9 | 1.9 | 1.9 | 1.9 |
| DPG (6) | 1.5 | 1.5 | 1.5 | 1.5 |
| Soufre | 1.5 | 1.5 | 1.5 | 1.5 |
| CBS(7) | 2.5 | 2.5 | 2.5 | 2.5 |

(1) idem tableau 2;
(2) idem tableau 2;
(3) idem tableau 2;
(4) idem tableau 2;
(5) idem tableau 2;
(6) idem tableau 2;
(7) idem tableau 2.

Tableau 5

| Composition No: | 6 | 7 | 8 | 9 |
|---|---|---|---|---|
| Bound Rubber (%) | 29 | 28 | 35 | -- |
| M10 (MPa) | 9.28 | 7.08 | 8.30 | 6.83 |
| M100 (MPa) | 8.18 | 6.90 | 9.82 | 6.59 |
| M300 (MPa) | 25.55 | 25.44 | 27.34 | 7.57 |

**Revendications**

1.  Dispositif de mesure de la vitesse de désagglomération aux ultrasons d'une charge se présentant sous la forme d'agglomérats de particules, ledit dispositif consistant en un circuit fermé (1) dans lequel peut circuler en boucle un flux (2) de ces particules en suspension dans un liquide (3), ledit circuit fermé (1) comportant au moins :

    -   (i) un préparateur (10) d'échantillon, destiné à recevoir l'échantillon de charge à tester et à l'envoyer à travers le circuit fermé (1) sous la forme du flux (2);

    -   (ii) suivi d'un granulomètre laser (20) destiné à mesurer la taille des agglomérats au passage du flux (2);

- (iii) lui-même suivi d'une cellule (30) de traitement en continu pourvue de moyens de cassage (35) destinés à casser les agglomérats au passage du flux en sortie du granulomètre laser (20), ladite cellule (30) étant disposée entre la sortie (22) du granulomètre (20) et l'entrée (11) du préparateur (10), de telle manière que le flux (2) de particules sortant du préparateur (10) traverse le granulomètre laser (20) avant d'entrer dans la cellule de traitement (30) ;

- (iv) au moins une mise à l'air libre (13, 33) pour l'élimination des bulles d'air dues à l'opération de cassage.

2. Dispositif de mesure selon la revendication 1, **caractérisé en ce que** les moyens de cassage consistent en une sonde ultrasons (35).

3. Dispositif selon la revendication 2, **caractérisé en ce que** la cellule de traitement (30) est agencée de telle manière que le flux (2) de particules qui pénètre dans ladite cellule (30), par une entrée (31), passe devant la tête (36) de la sonde ultrasons (35).

4. Dispositif selon l'une quelconque des revendications 2 ou 3, **caractérisé en ce que** la sonde ultrasons (35) a une puissance comprise dans un domaine de 10 à 2000 watts.

5. Méthode de mesure de la vitesse de désagglomération aux ultrasons d'une charge se présentant sous la forme d'agglomérats de particules, comportant au moins les étapes suivantes:

   - (a) on introduit la charge dans un liquide de manière à former une suspension liquide homogène;
   - (b) on fait circuler cette suspension liquide sous la forme d'un flux à travers un circuit comportant des moyens de cassage qui, au passage du flux, cassent les agglomérats et un granulomètre laser qui, à intervalles de temps "t" réguliers, mesure la taille "d" de ces agglomérats;
   - (c) on enregistre ainsi l'évolution de la taille "d" en fonction du temps "t";
   - (d) on en déduit la vitesse de désagglomération ou un paramètre lié à cette vitesse.

6. Méthode selon la revendication 5, **caractérisée en ce que** la taille mesurée est la taille moyenne en volume des agglomérats de particules, notée $d_v$, la vitesse de désagglomération notée "$\alpha$" étant représentée par la pente de la droite $[1/d_v(t) = f (t)]$ observée dans une zone de régime stable de désagglomération.

7. Méthode selon la revendication 5 ou 6, **caractérisée en ce qu'**on utilise une sonde ultrasons comme moyens de cassage.

8. Méthode selon les revendications 5 à 7 **caractérisée en ce qu'**elle est mise en oeuvre à l'aide d'un dispositif conforme à l'une quelconque des revendications 28 à 31.

9. Utilisation d'une méthode de mesure selon l'une quelconque des revendications 5 à 8, ou d'un dispositif selon l'une quelconque des revendications 1 à 4, pour l'évaluation de la dispersibilité d'une charge.


**Patentansprüche**

1. Vorrichtung zur Messung der Desagglomerationsgeschwindigkeit eines Füllstoffs, der in Form von Agglomeraten von Partikeln vorliegt, mit Ultraschall, wobei die Vorrichtung aus einem geschlossenen Kreislauf (1) besteht, in dem ein Strom (2) von Partikeln in Suspension in einer Flüssigkeit (3) zirkulieren gelassen werden kann, wobei der geschlossene Kreislauf (1) zumindest enthält:

   (i) eine Zelle zur Herstellung der Probe (10), die die Probe des zu testenden Füllstoffs aufnehmen und in Form des Stroms (2) durch den geschlossenen Kreislauf (1) leiten soll;

   (ii) danach ein Lasergranulometer (20), das zur Messung der Größe der Agglomerate beim Passieren des Stroms (2) vorgesehen ist;

   (iii) nach dem Lasergranulometer eine Zelle (30) zur kontinuierlichen Behandlung, die mit Einrichtungen zum Aufbrechen (35) versehen ist, die dazu vorgesehen sind, die Agglomerate beim Passieren des Stroms nach dem Auslass des Lasergranulometers (20) aufzubrechen, wobei die Zelle (30) zwischen dem Auslass (22) des Granulometers (20) und dem Einlass (11) der Probenzelle (10) so angebracht ist, dass der Strom (2) der Partikel, der von der Probenzelle (10) kommt, durch das Lasergranulometer (20) fließt, bevor er in die Behandlungszelle (30) eintritt; und

(iv) mindestens eine Einrichtung zur Verbindung mit freier Luft (13, 33) zur Entfernung von Luftblasen während des Aufbrechvorgangs.

2. Vorrichtung zur Messung nach Anspruch 1, **dadurch gekennzeichnet, dass** die Einrichtungen zum Aufbrechen aus einer Ultraschallsonde (35) bestehen.

3. Vorrichtung nach Anspruch 2, **dadurch gekennzeichnet, dass** die Behandlungszelle (30) so betrieben wird, dass der Strom (2) von Partikeln, der in die Zelle (30) über einen Einlass (31) eintritt, vor dem Kopf (36) der Ultraschallsonde (35) vorbeifließt.

4. Vorrichtung nach einem der Ansprüche 2 oder 3, **dadurch gekennzeichnet, dass** die Ultraschallsonde (35) eine Leistung im Bereich von 10 bis 2.000 Watt aufweist.

5. Verfahren zur Messung der Desagglomerationsgeschwindigkeit eines Füllstoffs, der in Form von Agglomeraten von Partikeln vorliegt, mit Ultraschall, das mindestens die folgenden Schritte umfasst:

- (a) Einbringen des Füllstoffs in eine Flüssigkeit, so dass eine homogene flüssige Suspension gebildet wird;

- (b) Zirkulierenlassen der flüssigen Suspension in Form eines Stroms durch einen Kreislauf, der Einrichtungen zum Aufbrechen, die beim Passieren des Stroms die Agglomerate aufbrechen, und ein Lasergranulometer aufweist, das in regelmäßigen Zeitabständen "t" die Größe "d" der Agglomerate misst;

- (c) Aufnahme der Veränderung der Größe "d" in Abhängigkeit von der Zeit "t";

- (d) Ableiten der Desagglomerationsgeschwindigkeit oder eines Parameters, der mit der Geschwindigkeit verbunden ist, daraus.

6. Verfahren nach Anspruch 5, **dadurch gekennzeichnet, dass** die gemessene Größe die auf das Volumen bezogene mittlere Größe der Agglomerate der Partikel ist, die als $d_v$ bezeichnet wird, wobei die mit $\alpha$ bezeichnete Desagglomerationsgeschwindigkeit durch die Steigung der Geraden [$1/d_v(t) = f(t)$] repräsentiert wird, die in einem stabilen Bereich der Desagglomeration aufgenommen wird.

7. Verfahren nach Anspruch 5 oder 6, **dadurch gekennzeichnet, dass** als Einrichtung zum Aufbrechen eine Ultraschallsonde verwendet wird.

8. Verfahren nach den Ansprüchen 5 bis 7, **dadurch gekennzeichnet, dass** es mit einer Vorrichtung nach einem der Ansprüche 1 bis 4 durchgeführt wird.

9. Verwendung eines Verfahrens zum Messen nach einem der Ansprüche 5 bis 8 oder einer Vorrichtung nach einem der Ansprüche 1 bis 4 zur Bestimmung der Dispergierbarkeit eines Füllstoffs.

**Claims**

1. A device for measuring the ultrasound disagglomeration rate of a filler in the form of agglomerates of particles, said device consisting of a closed circuit (1) within which a flow (2) of these particles suspended in a liquid (3) can circulate in a loop, said closed circuit (1) comprising at least:

- (i) a sample preparer (10), intended to receive the sample of filler to be tested and to send it through the closed circuit (1) in the form of the flow (2);
- (ii) followed by a laser granulometer (20) intended to measure the size of the agglomerates as the flow (2) passes;
- (iii) itself followed by a continuous treatment cell (30) provided with breaking means (35) for breaking up the agglomerates as the flow passes on emerging from the laser granulometer (20), said cell (30) being arranged between the outlet (22) of the granulometer (20) and the inlet (11) of the preparer (10), such that the flow (2) of particles emerging from the preparer (10) passes through the laser granulometer (20) before entering the treatment cell (30);

- (iv) at least one vent to the open air (13, 33) for removing air bubbles due to the breaking operation.

2. A measuring device according to Claim 1, **characterised in that** the breaking means consist of an ultrasonic probe (35).

3. A device according to Claim 2, **characterised in that** the treatment cell (30) is arranged such that the flow (2) of particles which penetrates into said cell (30), via an inlet (31), passes in front of the head (36) of the ultrasonic probe (35).

4. A device according to any one of Claims 2 or 3, **characterised in that** the ultrasonic probe (35) has a power within a range from 10 to 2000 watts.

5. A method for measuring the ultrasound disagglomeration rate of a filler in the form of agglomerates of particles, comprising at least the following steps:

   - (a) the filler is introduced into a liquid so as to form a homogeneous liquid suspension;
   - (b) this liquid suspension is circulated in the form of a flow through a circuit comprising breaking means which, as the flow passes, break up the agglomerates, and a laser granulometer which, at regular intervals of time "t", measures the size "d" of these agglomerates;
   - (c) thus the evolution of the size "d" is recorded as a function of the time "t";
   - (d) the disagglomeration rate or a parameter linked to this rate is deduced therefrom.

6. A method according to Claim 5, **characterised in that** the size measured is the average size by volume of the agglomerates of particles, referred to as $d_v$, the disagglomeration rate, "$\alpha$", being represented by the gradient of the straight line $[1/d_v(t) = f(t)]$ observed in a zone of stable disagglomeration conditions.

7. A method according to Claim 5 or 6, **characterised in that** an ultrasonic probe is used as breaking means.

8. A method according to Claims 5 to 7, **characterised** that it is implemented using a device according to any one of Claims 28 to 31 [sic].

9. The use of a measuring method according to any one of Claims 5 to 8, or of a device according to any one of Claims 1 to 4, for evaluating the dispersibility of a filler.

# Fig. 1

## Fig. 2

## Fig. 3

## Fig. 4